# EUROPEAN PATENT APPLICATION

(11) **EP 4 021 019 A1**
(43) Date of publication of application: **29.06.2022**
(21) Application number: 20855633.2
(22) Date of filing: 09.07.2020
(51) Int. Cl.: H04W 4/02, H04W 8/04, H04W 8/14, H04W 64/00

(54) **LOCATION ACQUISITION METHOD AND APPARATUS, HSS, UDM DEVICE AND STORAGE MEDIUM**

(30) Priority: 21.08.2019 CN 201910775433
(71) Applicant: Nanjin Zhongxing Software Co, Ltd., Yuhuatai District Nanjing, Jiangsu 210012 (CN)
(72) Inventor: GUO, Hua, Nanjing, Jiangsu 210012 (CN)
(74) Representative: Novagraaf Technologies
(86) International application number: PCT/CN2020/101075
(87) International publication number: WO 2021/031738

(57) **Abstract**

The embodiments of the present disclosure provide a location acquisition method and apparatus, an HSS, a UDM device and a storage medium. In the method, in a case where an HSS receives a location query request which includes a target user to be queried and is sent by a location service device, the HSS sends a location acquisition request including the target user to an AMF device through a UDM device, the AMF device acquires 5G network location information of the target user according to the location acquisition request, and feeds back the 5G network location information to the HSS through the UDM device, so that the 5G network location information is sent to the location service device through the HSS. In the embodiments of the present disclosure, an original channel between the location service device and the HSS and a channel between the HSS and the UDM device are used to implement query about the 5G network location information, and there is no need to modify the location service device in order for the location service device to access the 5G network. The embodiments of the present disclosure have good universality and low costs, and are beneficial to the promotion of the 5G network.

## Description

### Technical Field

The present disclosure relates to the field of communications, and in particular, to a location acquisition method and apparatus, a Home Subscriber Server (HSS), a Unified Data Management (UDM) device and a storage medium.

### Background

The 3rd Generation Partnership Project (3GPP) introduces a 5th Generation (5G) network as a fifth generation mobile communication network. With the deployment of the 5G network, in a case where a user registers in the 5G network and it is needed to acquire location information of the user in the 5G network, the method adopted in the related art is to modify a related location service device to involve the location service device in the 5G network, and by modifying the location service device, enable the location service device to exchange a serving message with a series of 5G network devices such as a UDM and an Access and Mobility Management Function (AMF), thereby acquiring location information of the user in the 5G network. In this way, in a case where the user whose location information needs to be required is in a 4th Generation (4G) network, the location service device can acquire the 4G network location information of the user through a Home Subscriber Server (HSS) in the existing network architecture; and in a case where the user whose location information needs to be required is in the 5G network, the location service device can acquire the 5G network location information of the user through the UDM and the AMF. The above-mentioned method in the related art needs to modify the location service device, and therefore has high costs and poor universality, which is not beneficial to the promotion of the 5G network.

In addition, the 4G network location information and the 5G network location information are queried via different query paths. In a case where a location query request is initiated to query the 4G network location information of the user but such query fails, the location query request needs to be initiated again to query the 5G network location information of the user, that is, at least two query processes need to be initiated, and such implementation process is complex and inefficient.

### Summary

Embodiments of the present disclosure provide a location acquisition method and apparatus, an HSS, a UDM device and a storage medium, which solve the problems in the related art that a location service device needs to be modified to acquire 5G network location information, thereby having high costs and poor universality.

To solve the described technical problem, some embodiments of the present disclosure provide a 5G network location acquisition method, including: receiving, by an HSS, a location query request sent by a location service device, wherein the location query request includes information of a target user to be queried; sending, by the HSS, a location acquisition request including the target user to an AMF device through a UDM device; receiving, by the HSS, a location acquisition response sent by the AMF device through the UDM device, wherein the location acquisition response includes 5G network location information of the target user; and sending, by the HSS, the 5G network location information of the target user to the location service device.

In order to solve the described technical problem, some embodiments of the present disclosure provide a 5G network location acquisition method, including: receiving, by a UDM device, a location acquisition request sent by an HSS, and sending, by the UDM device, the location acquisition request to an AMF device, wherein the location acquisition request includes a target user to be located, and the location acquisition request is sent in a case where the HSS determines that the target user is currently registered in a 5G network; and receiving, by the UDM device, a location acquisition response sent by the AMF device, and sending, by the UDM device, the location acquisition response to the HSS, wherein the location acquisition response includes 5G network location information of the target user.

In order to solve the described technical problem, some embodiments of the present disclosure provide a 5G network location acquisition apparatus, which is applied to an HSS and includes: an information receiving module, configured to receive a location query request sent by a location service device, wherein the location query request includes information of a target user to be queried; an information acquiring module, configured to send a location acquisition request including the target user to an AMF device through a UDM device, and receive a location acquisition response sent by the AMF device through the UDM device, wherein the location acquisition response includes 5G network location information of the target user; and an information sending module, configured to send the 5G network location information of the target user to the location service device.

In order to solve the described technical problem, some embodiments of the present disclosure provide a 5G network location acquisition apparatus, which is applied to a UDM device and includes: a request forwarding module, configured to receive a location acquisition request sent by an HSS, and send the location acquisition request to an AMF device, wherein the location acquisition request includes a target user to be located, and the location acquisition request is sent in a case where the HSS determines that the target user is currently registered in a 5G network; and an information forwarding module, configured to receive a location acquisition response sent by the AMF device, and send the location acquisition response to the HSS, wherein the location acquisition response includes 5G network location information of the target user.

In order to solve the described technical problem, some embodiments of the present disclosure provide an HSS, including a first processor, a first memory, and a first communication bus, wherein the first communication bus is configured to connect the first processor and the first memory; and the first processor is configured to execute a first computer program stored in the first memory to implement the above operations of the 5G network location acquisition method.

In order to solve the described technical problem, some embodiments of the present disclosure provide a UDM device, including a second processor, a second memory, and a second communication bus, wherein the second communication bus is configured to connect the second processor and the second memory; and the second processor is configured to execute a second computer program stored in the second memory to implement the above operations of the 5G network location acquisition method.

In order to solve the described technical problem, some embodiments of the present disclosure provide a computer-readable storage medium, wherein the computer-readable storage medium stores a first computer program, and the first computer program is able to be executed by a first processor to implement the above operations of the 5G network location acquisition method; or the computer-readable storage medium stores a second computer program, and the second computer program is able to be executed by a second processor to implement the above operations of the 5G network location acquisition method.

### Advantageous Effects

According to the location acquisition method and apparatus, the HSS, the UDM device and the storage medium provided in the embodiments of the present disclosure, in a case where an HSS receives a location query request which includes a target user to be queried and is sent by a location service device, the HSS sends a location acquisition request including the target user to an AMF device through a UDM device; the AMF acquires 5G network location information of the target user according to the location acquisition request, and feeds back the 5G network location information to the HSS through the UDM device, so that the 5G network location information is sent to the location service device through the HSS. In the embodiments of the present disclosure, an original channel between a location service device and the HSS and a channel between the HSS and the UDM device are used to implement query about the 5G network location information, and there is no need to modify the location service device in order for the location service device to access the 5G network. The embodiments of the present disclosure have good universality and low costs, and are beneficial to the promotion of the 5G network.

Further, in the embodiments, in a case where the HSS receives the location query request sent by the location service device, if the target user is not currently registered in the 5G network, the HSS can directly acquire 4G network location information of the target user in the 4G network and feeds back the 4G network location information to the location service device, without the need for the location service device to re-send the location query request after detecting that the acquisition of the 5G network location information fails, thereby greatly simplifying a location query process and universality of the location query, and greatly improving the location query efficiency.

Additional features and corresponding advantages of the disclosure will be set forth in the description which follows, and in part will be readily apparent from the description.

### Brief Description of the Drawings

Fig. 1 is a schematic diagram of a service-based 5G network architecture in 3GPP;
Fig. 2 is a schematic diagram of a 5G deployment mode under a network architecture;
Fig. 3 is a schematic flowchart of a 5G network location acquisition method from the perspective of an HSS according to a first embodiment of the present disclosure;
Fig. 4 is a schematic flowchart of acquiring 4G network location information according to a first embodiment of the present disclosure;
Fig. 5 is a schematic flowchart of a 5G network location acquisition method from the perspective of a UDM device according to a first embodiment of the present disclosure;
Fig. 6 is a schematic diagram of a network architecture according to a second embodiment of the present disclosure;
Fig. 7 is a schematic flowchart of a 5G network location acquisition method according to a second embodiment of the present disclosure;
Fig. 8 is a schematic flowchart of another 5G network location acquisition method according to a second embodiment of the present disclosure;
Fig. 9 is a schematic structural diagram of a 5G network location acquisition apparatus applied to an HSS according to a third embodiment of the present disclosure;
Fig. 10 is a schematic structural diagram of a 5G network location acquisition apparatus applied to a UDM device according to a third embodiment of the present disclosure;
Fig. 11 is a schematic structural diagram of an HSS according to a fourth embodiment of the present disclosure; and
Fig. 12 is a schematic structural diagram of a UDM device according to a fourth embodiment of the present disclosure.

### Detailed Description

To make the objectives, technical solutions, and advantages of the present disclosure clearer and more comprehensible, the following further describes the embodiments of the present disclosure in detail with reference to the accompanying drawings and exemplary implementations. It should be understood that the embodiments described herein are only intended to explain the present disclosure, but not to limit the present disclosure.

### First embodiment

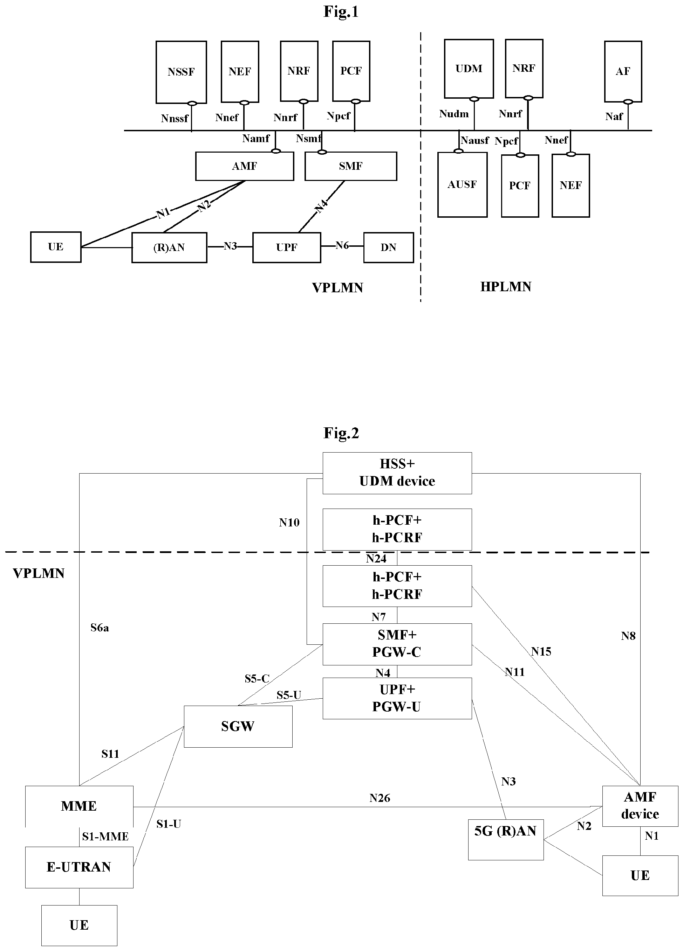

For ease of understanding, the embodiment hereby provides some exemplary description concerning the understanding background with reference to Fig. 1 which is a schematic diagram of a service-based 5G network architecture in 3GPP and Fig. 2 which is a schematic diagram of a 5G deployment mode under a network architecture. Furthermore, it should be understood that the 5G network location acquisition method in the embodiments is not limited to the application scenarios shown in Fig. 1 and Fig. 2. Referring to Fig. 2, when deploying a 5G service, a telecommunication operator deploys an integrated device of an HSS and a UDM device to provide an Evolved Packet Core (EPC, 4G core network) and a unified data management of 5G at the same time.

The AMF device is responsible for user mobility management and connection management.

The UDM device is configured to provide user mobility context management and subscription data management functions.

An HSS is a server for storing user subscription information, and is an evolution and upgrade of a 2G/3G network element HLR. The HSS is mainly responsible for managing subscription data of a user and location information of a mobile user. The HSS may be used for a 4G network for storing 4G related subscription data of a user and 4G network location information.

In an integrated device of an HSS and a UDM device, the HSS and the UDM device may interact with each other through, but not limited to, various internal messages.

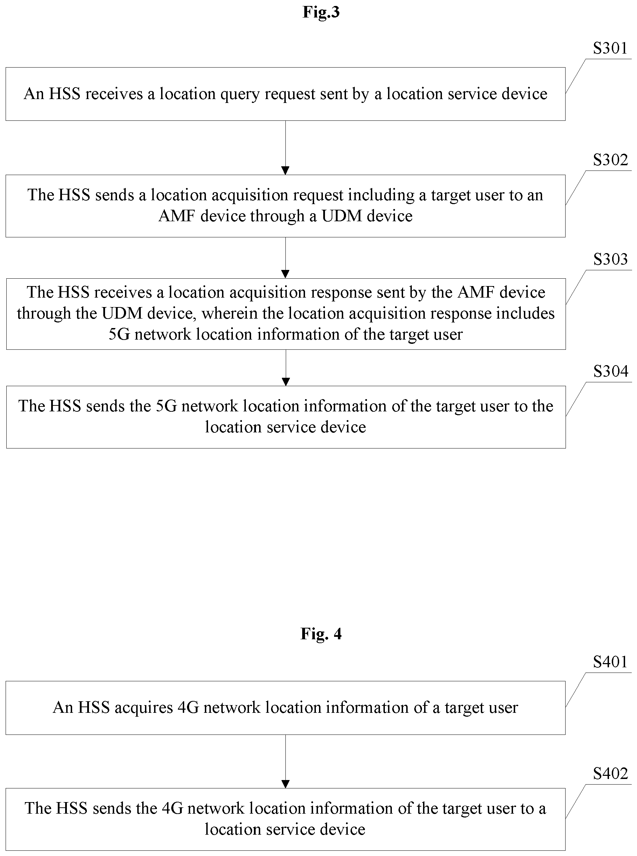

For ease of understanding, the present embodiment is described below with reference to an example of a 5G network location acquisition method from the perspective of an HSS. Referring to Fig. 3, the method includes operations S301 to S304.

At S301, an HSS receives a location query request sent by a location service device.

The location service device in the embodiment may be various types of devices capable of initiating location query, for example, a Service Control Point (SCP) device, which may be, for example, a positioning gateway. In the embodiment, the location query request sent by the location service device may include, but is not limited to, information of a target user to be queried. Furthermore, in the embodiments, various existing interface paths between the location service device and the HSS may be directly used. Of course, in some application scenarios, the interface of the location service device can also be extended to connect with the HSS as required.

In some application scenarios of the embodiment, the location query request sent by the location service device may be a 5G network location query request, a 4G network location query request, or a general location query request. In a case where the HSS receives a 5G network location query request or a general location query request, the HSS may execute the flow shown in Fig. 3. In a case where the HSS receives a 4G network location query request, the HSS may directly acquire a 4G network location of the target user requested to be queried by the 4G network location query request by various 4G network location query manners, which will not be described herein.

At S302, the HSS sends a location acquisition request including the target user to an AMF device through a UDM device.

In the embodiments, the HSS may send the location acquisition request to the UDM device through, but not limited to, an internal message, so as to send the location acquisition request to the AMF device through the UDM device.

In some examples, before the HSS sends the location acquisition request to the AMF device through the UDM device, the method may further include:
The HSS determines, according to the information of the target user, whether the target user is currently registered in a 5G network. In a case where the HSS determines, according to the information of the target user, that the target user is currently registered in the 5G network, operation S302 is executed; in a case where the HSS determines, according to the information of the target user, that the target user is currently registered in a 4G network, the operations S401 and S402 as shown in Fig. 4 may be executed.

At S401, the HSS acquires 4G network location information of the target user.

At S402, the HSS sends the 4G network location information of the target user to the location service device.

Therefore, in this example, in a case where the HSS receives the location query request sent by the location service device, if the target user is not currently registered in the 5G network, the HSS can directly acquire the 4G network location information of the target user in the 4G network and feed back the 4G network location information of the target user to the location service device, without the need for the location service device to re-send the location query request after detecting that the acquisition of the 5G network location information fails, thereby greatly simplifying a location query process and universality of the location query, and greatly improving the location query efficiency.

At S303, the HSS receives a location acquisition response sent by the AMF device through the UDM device, wherein the location acquisition response includes 5G network location information of the target user.

In some examples of the embodiment, the AMF device may acquire the current location information of the target user in the 5G network (the current 5G network location information of the target user) through, but not limited to, paging. The specific acquisition process may adopt various acquisition processes of the 5G network location information, and will not be repeated here.

At S304, the HSS sends the 5G network location information of the target user to the location service device.

In some examples, in order to avoid incompatibility of the 5G network location information received by the location service device, before the HSS sends the 5G network location information of the target user to the location service device in S304, the method may further include the following operation.

The 5G network location information is converted into a location information format recognizable to the location service device. For example, in some application scenarios, the location information format recognizable to the location service device may be, but is not limited to, the 4G network location information format.

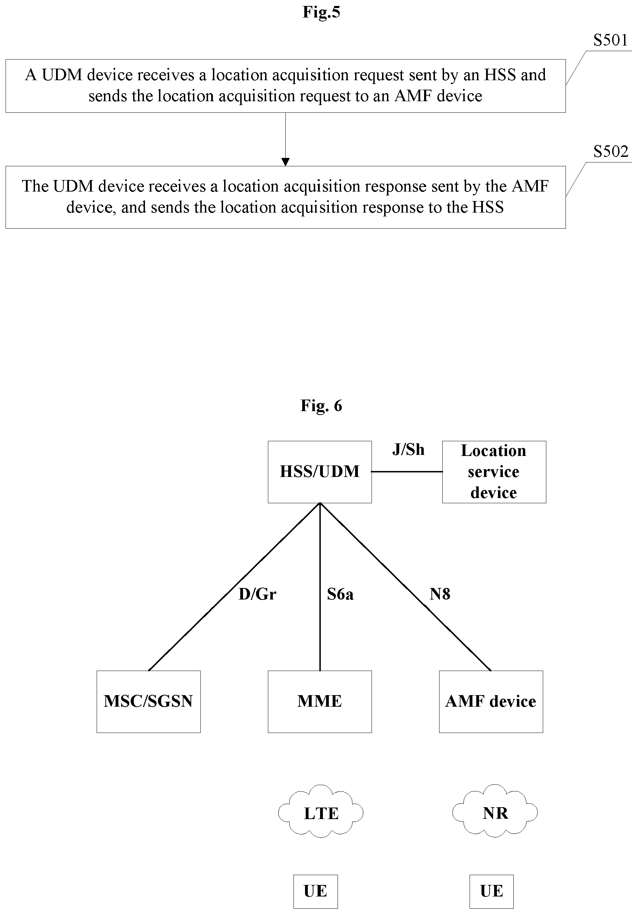

Accordingly, in the embodiment, as shown in Fig. 5, the 5G network location acquisition method from the perspective of a UDM device may correspondingly include operations S501 and S502.

At S501, the UDM device receives the location acquisition request sent by the HSS and sends the location acquisition request to the AMF device.

As shown in the analysis above, the location acquisition request includes the target user to be located, and the location acquisition request is sent in a case where the HSS determines that the target user is currently registered in the 5G network.

At S502, the UDM device receives a location acquisition response sent by the AMF device, and sends the location acquisition response to the HSS.

The location acquisition response includes the 5G network location information of the target user.

Through the 5G network location acquisition method provided in the present embodiment, location information of a user in the 4G network (4G network location information of a user) may be provided to a relevant location service device through an existing path and interface between the HSS and the relevant location service device and between the HSS and the UDM device; or the 5G network location information may be directly provided when the user resides in the 5G network. The solution of the embodiment of the present disclosure avoids upgrading a relevant location service device to provide a 5G service interface, and also eliminates the need to use a 5G service interface to re-query location information under a 5G network in a case where a query for 4G network location information of the user fails, thereby simplifying a location query mechanism.

### Second embodiment

For ease of understanding, the present embodiment is described below based on an example of an integrated device of an HSS and a UDM device (the integrated device is referred to as HSS/UDM in the embodiment). An exemplary network architecture is shown in Fig. 6.

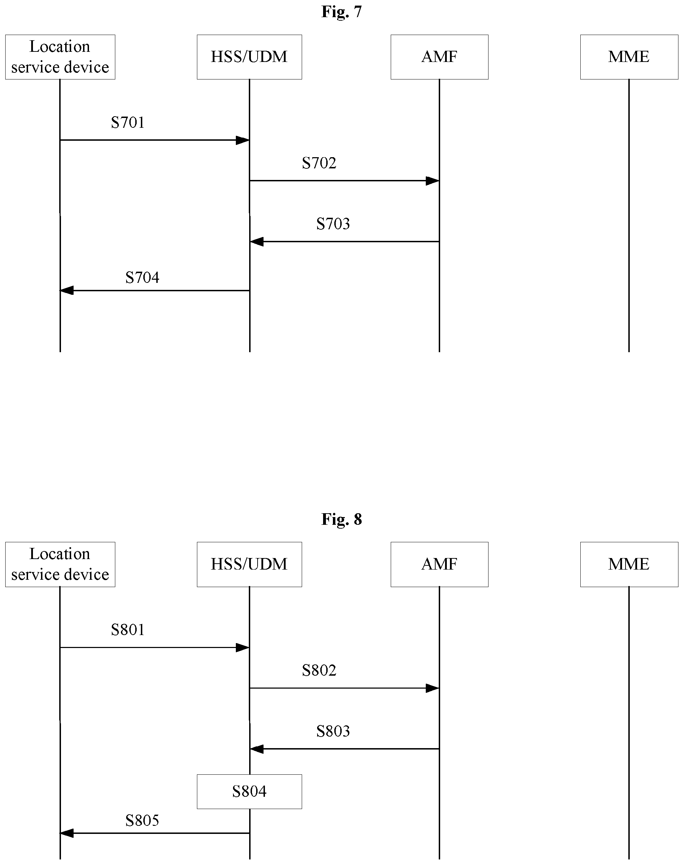

Based on the network architecture shown in Fig. 6, in an application scenario, it is assumed that a User Equipment (UE) of a target user currently resides in a 5G network, and the UE may be at least one of the following: an LTE/NR multi-mode multi-standby terminal and an LTE/NR multi-mode single-standby terminal. Referring to Fig. 7, a process of querying 5G network location information in this example includes operations S701 to S704.

At S701, a location service device initiates a location query request to an HSS/UDM.

At S702, the HSS/UDM determines that the target user is registered in a 5G network according to registration information of the target user in the location query request, and acquires 5G network location information of the target user by invoking a location service operation of the AMF

At S703, the AMF acquires the current location information of the target user in the 5G network (5G network location information of the target user) through paging, and returns a service invocation result to the HSS/UDM.

At S704, the HSS/UDM returns the location information of the user in the 5G network to the location service device according to the location information in the 5G network returned by the AMF

The subsequent processes of the AMF are not described in the present embodiment, because those having ordinary skill in the art already know the processes.

Compared with the 3GPP standard procedure, the procedure shown in this example in Fig. 7 does not require any modification of an existing network device except that a new parameter of 5G network location information is added to an interface between a traditional location service device and an HSS device without changing the procedure. The solution has good universality and low cost, which is more beneficial to the convergence and promotion of the 5G network.

Fig. 8 is a flowchart of location information query in a case where a user resides in a 5G network in another application scenario provided in the present embodiment. The process includes the following operations S801 to S805.

At S801, a location service device initiates a location query request to an HSS/UDM.

At S802, the HSS/UDM determines that a target user is registered in a 5G network according to registration information of the target user in the location query request, and acquires 5G network location information of the target user by invoking a location service operation of an AMF

At S803, the AMF acquires the current 5G network location information of the target user through paging, and returns the service invocation result to the HSS/UDM.

At S804, the HSS/UDM maps and converts the 5G network location information into a 4G network location information format according to the 5G network location information returned by the AMF

At S805, the HSS/UDM feeds the converted 5G network location information in the 4G network location information format back to the location service device.

In the present embodiment, in a case where the user roams to the 5G network, the user location service can be completed through the HSS/UDM device to normally provide the user location information. In this way, the traditional location service device can acquire the 5G network location information of the user without the need to support a 5G service interface additionally.

### Third embodiment

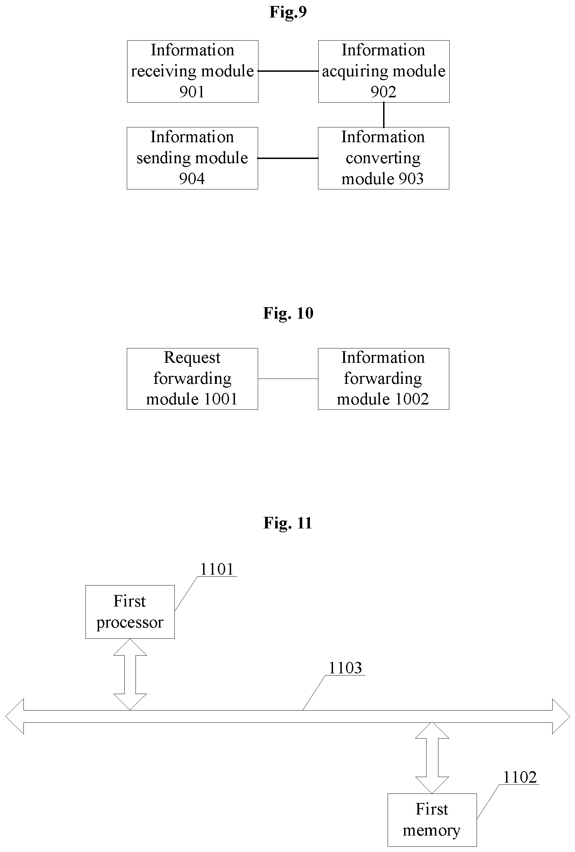

The present embodiment provides a 5G network location acquisition apparatus applied to an HSS. As shown in Fig. 9, the 5G network location acquisition apparatus includes an information receiving module 901, an information acquiring module 902 and an information sending module 904.

The information receiving module 901 is configured to receive a location query request sent by a location service device, wherein the location query request includes information of a target user to be queried. For a specific receiving process, reference may be made to the description of the foregoing embodiments, and details are not repeatedly described herein.

The information acquiring module 902 is configured to send a location acquisition request including the target user to an AMF device through a UDM device, and receive a location acquisition response sent by the AMF device via the UDM device, wherein the location acquisition response includes 5G network location information of the target user. For a specific acquiring process, reference is made to the foregoing embodiments, and details are not repeatedly described herein.

The information sending module 904 is configured to send the 5G network location information of the target user to the location service device. For a specific sending process, reference is made to the foregoing embodiments, and details are not repeatedly described herein.

In some exemplary implementations, referring to Fig. 9, the 5G network location acquisition apparatus further includes: an information converting module 903, configured to convert the 5G network location information into a location information format recognizable to the location service device, for example, a 5G network location information format, before the information sending module sends the 5G network location information of the target user to the location service device.

The present embodiment provides a 5G network location acquisition apparatus applied to a UDM device. Referring to Fig. 10, the apparatus includes: a request forwarding module 1001 and an information forwarding module 1002.

The request forwarding module 1001 is configured to receive a location acquisition request sent by an HSS, and send the location acquisition request to an AMF device, wherein the location acquisition request includes a target user to be positioned, and the location acquisition request is sent in a case where an HSS determines that the target user is currently registered in a 5G network. For a specific forwarding process, reference is made to the foregoing embodiments, and details are not repeatedly described herein.

The information forwarding module 1002 is configured to receive a location acquisition response sent by an AMF device, and send the location acquisition response to an HSS, wherein the location acquisition response includes 5G network location information of the target user. For a specific forwarding process, reference is made to the foregoing embodiments, and details are not repeatedly described herein.

### Fourth embodiment

The present embodiment provides an HSS. Referring to Fig. 11, the HSS includes a first processor 1101, a first memory 1102, and a first communications bus 1103.

The first communication bus 1103 is configured to implement a communication connection between the first processor 1101 and the first memory 1102.

In an example, the first processor 1101 may be configured to execute a first computer program stored in the first memory 1102 to implement the operations of the 5G network location acquisition method from the perspective of the HSS in the above embodiments.

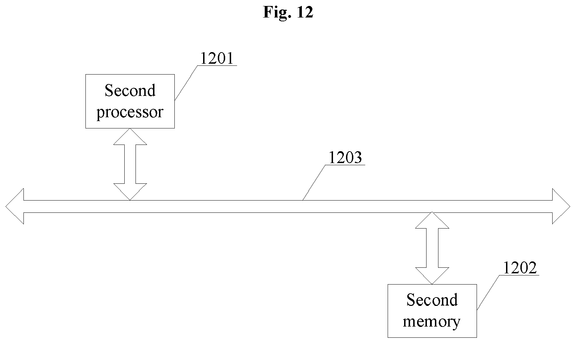

The present embodiment provides a UDM device. As shown in Fig. 12, the UDM device includes a second processor 1201, a second memory 1202, and a second communication bus 1203.

The second communication bus 1203 is configured to implement a communication connection between the second processor 1201 and the second memory 1202.

In an example, the second processor 1201 may be configured to execute a second computer program stored in the second memory 1202 to implement the operations of the 5G network location acquisition method from the perspective of the UDM device in the above embodiments.

The present embodiment provides a computer-readable storage medium that includes volatile or non-volatile, removable or non-removable media implemented in any method or technology for storage of information (such as computer-readable instructions, data structures, computer program modules, or other data). The computer-readable storage medium includes, but is not limited to, Random Access Memory (RAM), Read-Only Memory (ROM), Electrically Erasable Programmable read only memory (EEPROM), flash memory or other memory technology, Compact Disc Read-Only Memory (CD-ROM), Digital Video Disc (DVD) or other optical disk storage, magnetic cassettes, magnetic tape, magnetic disk storage or other magnetic storage devices, or any other medium which can be used to store the desired information and which can be accessed by a computer.

In an example, the computer-readable storage medium in the present embodiment may be configured to store a first computer program, and the first computer program may be executed by a first processor to implement operations of the 5G network location acquisition method from the perspective of an HSS in the foregoing embodiments.

In another example, the computer-readable storage medium in the present embodiment may be configured to store a second computer program, and the second computer program may be executed by the second processor to implement operations of the 5G network location acquisition method from the perspective of a UDM device in the foregoing embodiments.

The present embodiment provides a first computer program (or referred to as first computer software). The first computer program may be stored on a computer-readable medium and executed by a computing device, so as to implement at least one operation of the 5G network location acquisition method from the perspective of an HSS as described in the above embodiments. Furthermore, in some cases, at least one operation shown or described may be executed in a sequence different from that described in the foregoing embodiments.

The present embodiment provides a second computer program (or referred to as second computer software). The second computer program may be stored on a computer-readable medium and executed by a computing device, so as to implement at least one operation of the 5G network location acquisition method from the perspective of a UDM device as described in the foregoing embodiments. Furthermore, in some cases, at least one operation shown or described may be executed in a sequence different from that described in the foregoing embodiments.

The present embodiment provides a computer program product, which includes a computer-readable device, and any one of the computer programs as shown in the foregoing is stored in the computer-readable device. The computer-readable device in the present embodiment can include the foregoing computer-readable storage medium.

It can be seen that those having ordinary skill in the art should understand that all or some of the operations in the methods disclosed above and the functional modules/units in the systems and apparatuses can be implemented as software (which may be implemented by computer program codes executable by a computing device), firmware, hardware and appropriate combinations thereof. In a hardware implementation, the division between functional modules/units referred to in the above description does not necessarily correspond to the division of physical components. For example, one physical component may have multiple functions, or one function or operation may be cooperatively performed by several physical components. Some or all of the physical components may be implemented as software executed by a processor, such as a central processor, or digital signal processor, or microprocessor, or as hardware, or as an integrated circuit, such as an application specific integrated circuit.

In addition, as known to those having ordinary skill in the art, communication media typically includes computer-readable instructions, data structures, computer program modules, or other data in a modulated data signal such as a carrier wave or other transport mechanism, and may include any information delivery media. Hence, the present disclosure is not limited to any particular combination of hardware and software.

The foregoing content is further detailed description of the embodiments of the present disclosure with reference to exemplary embodiments, and it cannot be considered that the specific implementation of the present disclosure is only limited to these descriptions. For those having ordinary skill in the art to which the present disclosure belongs, on the premise of keeping the conception of the present disclosure, a number of simple deductions or replacements may also be made, and all of which should be considered to belong to the protection scope of the present disclosure.

### Industrial applicability

According to a location acquisition method and apparatus, an HSS, a UDM device and a storage medium provided in the embodiments of the present disclosure, in a case where an HSS receives a location query request which includes a target user to be queried and is sent by a location service device, the HSS sends a location acquisition request including the target user to an AMF device through a UDM device, the AMF device acquires 5G network location information of the target user according to the location acquisition request, and feeds back the 5G network location information to the HSS through the UDM device, so that the 5G network location information is sent to the location service device through the HSS. In the embodiments of the present disclosure, an original channel between the location service device and the HSS and a channel between the HSS and the UDM device are used to implement query about the 5G network location information, and there is no need to modify the location service device in order for the location service device to access the 5G network. The embodiments of the present disclosure have good universality and low costs, and are beneficial to the promotion of the 5G network.

## Claims

1. A Fifth Generation, 5G, network location acquisition method, comprising:
receiving, by a Home Subscriber Server, HSS, a location query request sent by a location service device, wherein the location query request comprises information of a target user to be queried;
sending, by the HSS, a location acquisition request comprising the target user to an Access and Mobile Management Function, AMF, device through a Unified Data Management, UDM, device;
receiving, by the HSS, a location acquisition response sent by the AMF device through the UDM device, wherein the location acquisition response comprises 5G network location information of the target user; and
sending, by the HSS, the 5G network location information of the target user to the location service device.

2. The 5G network location acquisition method according to claim 1, wherein before sending, by the HSS, the 5G network location information of the target user to the location service device, the method further comprises:
converting the 5G network location information into a location information format recognizable to the location service device.

3. The 5G network location acquisition method according to claim 2, wherein the location information format recognizable to the location service device is a Fourth Generation, 4G, network location information format.

4. The 5G network location acquisition method according to any one of claims 1 to 3, wherein before sending, by the HSS, the location acquisition request to the AMF device through the UDM device, the method further comprises:
determining, by the HSS according to the information of the target user, whether the target user is currently registered in a 5G network.

5. The 5G network location acquisition method according to claim 4, wherein in a case where the HSS determines, according to the information of the target user, that the target user is currently registered in a Fourth Generation, 4G, network, the method further comprises:
acquiring, by the HSS, 4G network location information of the target user; and
sending, by the HSS, the 4G network location information of the target user to the location service device.

6. A Fifth Generation, 5G, network location acquisition method, comprising:
receiving, by a Unified Data Management, UDM, device, a location acquisition request sent by a Home Subscriber Server, HSS, and sending, by the UDM device, the location acquisition request to an Access and Mobile Management Function, AMF, device, wherein the location acquisition request comprises a target user to be located, and the location acquisition request is sent in a case where the HSS determines that the target user is currently registered in a 5G network; and
receiving, by the UDM device, a location acquisition response sent by the AMF device, and sending, by the UDM device, the location acquisition response to the HSS, wherein the location acquisition response comprises 5G network location information of the target user.

7. A Fifth Generation, 5G, network location acquisition apparatus, applied to a Home Subscriber Server, HSS, and comprising:
an information receiving module, configured to receive a location query request sent by a location service device, wherein the location query request comprises information of a target user to be queried;
an information acquiring module, configured to send a location acquisition request comprising the target user to an Access and Mobile Management Function, AMF, device through a Unified Data Management UDM device, and receive a location acquisition response sent by the AMF device through the UDM device, wherein the location acquisition response comprises 5G network location information of the target user; and
an information sending module, configured to send the 5G network location information of the target user to the location service device.

8. The 5G network location acquisition apparatus according to claim 7, further comprising: an information converting module, configured to convert the 5G network location information into a location information format recognizable to the location service device before the information sending module sends the 5G network location information of the target user to the location service device.

9. A Fifth Generation, 5G, network location acquisition apparatus, applied to a Unified Data Management, UDM, device and comprising:
a request forwarding module, configured to receive a location acquisition request sent by a Home Subscriber Server, HSS, and send the location acquisition request to an Access and Mobile Management Function, AMF, device, wherein the location acquisition request comprises a target user to be located, and the location acquisition request is sent in a case where the HSS determines that the target user is currently registered in a 5G network; and
an information forwarding module, configured to receive a location acquisition response sent by the AMF device, and send the location acquisition response to the HSS, wherein the location acquisition response comprises 5G network location information of the target user.

10. A Home Subscriber Server, HSS, comprising a first processor, a first memory and a first communication bus, wherein
the first communication bus is configured to connect the first processor and the first memory; and
the first processor is configured to execute a first computer program stored in the first memory to implement operations of the 5G network location acquisition method according to any one of claims 1-5.

11. A Unified Data Management, UDM, device, comprising a second processor, a second memory and a second communication bus, wherein
the second communication bus is configured to connect the second processor and the second memory; and
the second processor is configured to execute a second computer program stored in the second memory to implement operations of the 5G network location acquisition method according to claim 6.

12. A computer-readable storage medium, wherein the computer-readable storage medium stores a first computer program, and the first computer program is able to be executed by a first processor to implement operations of the 5G network location acquisition method according to any one of claims 1 to 5;
or,
the computer-readable storage medium stores a second computer program, and the second computer program is able to be executed by a second processor to implement operations of the 5G network location acquisition method according to claim 6.
